# EUROPEAN PATENT APPLICATION

(11) **EP 4 653 941 A1**
(43) Date of publication of application: **26.11.2025**
(21) Application number: 24744917.6
(22) Date of filing: 19.01.2024
(51) Int. Cl.: G02F 1/1334, G02F 1/1337, G02F 1/137, C09K 19/02, G02F 1/139

(54) **REVERSE MODE PDLC FILM HAVING HORIZONTAL ALIGNMENT OF LIQUID CRYSTALS, AND CONTINUOUS PROCESS MANUFACTURING EQUIPMENT AND METHOD FOR PDLC FILM COMPRISING ALIGNMENT LAYER**

(30) Priority: 19.01.2023 KR 20230008168; 30.06.2023 KR 20230084778; 30.06.2023 KR 20230084781
(71) Applicant: Vsion Inc., Daegu 41260 (KR)
(72) Inventor: YUN, Hee Young, Gwangju-si Gyeonggi-do 12772 (KR)
(74) Representative: Maiwald GmbH
(86) International application number: PCT/KR2024/000933
(87) International publication number: WO 2024/155138

(57) **Abstract**

A reverse mode PDLC film having horizontal alignment of liquid crystals according to the present invention comprises: an alignment layer comprising a base film, an alignment imparting layer formed by coating an acrylate film on the base film, and an electrode layer; and a liquid crystal layer (21) at least bonded to the one alignment layer and including nematic liquid crystals and a reactive monomer and an additive that form a polymer network so that the nematic liquid crystals have a constant alignment, wherein the nematic liquid crystals include at least two types of nematic liquid crystals having different dielectric anisotropy, including only nematic liquid crystals having positive dielectric anisotropy, and is configured to maintain a horizontal arrangement parallel to the alignment layer in an electric field off state, thereby significantly increasing productivity compared to a conventional reverse mode PDLC film.

## Description

### Technical Field

The present disclosure relates to a reverse mode PDLC film having horizontal alignment of liquid crystals, and continuous process manufacturing equipment and method for a PDLC film including an alignment layer.

### Background Art

Liquid crystals are substances that have both the ordered molecular arrangement properties of crystalline solids and the fluidity of liquids. They are largely classified into thermotropic and lyotropic. Thermotropic liquid crystals exhibit liquid crystal properties above a certain temperature, while lyotropic liquid crystals exhibit liquid crystal properties above a certain concentration. Thermotropic liquid crystals are extensively utilized in industry, particularly as materials for various types of display devices commonly found in everyday life.

This is because there are types of liquid crystals in which the molecular arrangement changes according to variations in voltage. These liquid crystals have the property of being rearranged by voltage. This allows the optical transmittance to be adjusted on a per-pixel basis according to the intended purpose, ultimately changing the overall display pattern of a visual display device. A representative product of a device that utilizes this property is a liquid crystal display (LCD).

The types of liquid crystals applied to these liquid crystal displays, etc., can be classified into three types: nematic liquid crystals, in which liquid crystal molecules, typically rod-shaped, are arranged in an orderly manner along the axial direction, although the liquid crystal molecules have no positional order; smectic liquid crystals, in which liquid crystal molecules are arranged in a parallel, orderly manner along the vertical long axis to form a layered structure; and cholesteric liquid crystals, in which the orientation of liquid crystal molecular axis is spatially and continuously changed due to chirality, which arises from the presence of asymmetric carbon atoms in nematic liquid crystals, resulting in the formation of a single unit of macroscopic helical structure composed of multiple nematic crystal layers. Traditionally, in the field of liquid crystal displays, cholesteric liquid crystals, in which the pitch is defined as the distance required for one full rotation of the helical structure, have been predominantly used.

Products known as "smart windows", which utilize the above-described types of liquid crystals, are gaining attention. Unlike liquid crystal displays that include polarizing layers and pixel-level color filters to display specific images, smart windows adopt only the essential functional configuration required to control light transmittance through voltage-induced changes in liquid crystal molecular arrangement.

Here, "smart window" is a widely used term describing a window that can switch between transparent and opaque modes by varying light transmittance depending on the presence or absence of applied voltage. A smart window can be implemented by bonding a film with such a function onto at least one surface of a transparent glass plate.

A polymer dispersed liquid crystal (PDLC) film is commonly used as the film in smart windows.

PDLC refers to a structure in which liquid crystals exist in a dispersed form within a polymer matrix, typically found in liquid crystal films. The term may also denote either a liquid crystal layer itself in this dispersed form or the entire liquid crystal film that includes such a layer. In the present disclosure, the term "PDLC film" is primarily used to refer to "a film including a liquid crystal layer in which liquid crystals exist dispersed within a polymer matrix.

In the case of a typical PDLC film, the liquid crystal layer is structurally characterized by droplets containing liquid crystal molecules that are randomly dispersed within a polymer matrix. Due to the irregular arrangement of the liquid crystals within each droplet, the film exhibits a haze state that scatters light when no voltage is applied. However, when a voltage is applied via indiumtin oxide (ITO), which is a transparent electrode material located on the outer side of the liquid crystal layer, the liquid crystals within each droplet become uniformly arranged, resulting in a transition to a transparent state.

Such a normal PDLC film can be fabricated simply by attaching or forming an ITO layer on both sides of a polymer layer (liquid crystal layer) containing dispersed liquid crystal droplets. This simplicity in manufacturing process and structure, compared to display films, enables cost-effective production.

In other words, when a smart window is implemented using a PDLC film, functions such as daylighting, privacy protection, shading, and insulation can be easily switched, offering versatile applications across various industrial fields including smart buildings, automobiles, and screens. As a result, the related market is experiencing significant growth. However, the drawback of the above-described normal PDLC is that it requires voltage application to maintain a transparent mode, which is likely to be the default state for extended periods. This leads to concerns about excessive power consumption. Moreover, in applications such as automotive windows where maintaining transparency during driving is critical for clear visibility, there are concerns about visibility instability or safety risks in the event of electrical faults such as sudden power outages. These challenges can act as barriers to broader market adoption.

As part of research and development efforts to address the above problems, reverse mode PDLC films have been proposed by Merck in Germany and others. These films are designed to maintain a transparent state with high visible light transmittance in a normal state where no voltage is applied, and transition to a haze state with reduced transmittance only when an electric field is applied. However, in order to ensure uniform alignment of liquid crystals in the absence of voltage, an alignment layer is essential. The use of polyimide as an alignment layer material in LCDs results in high material costs. It also requires a rubbing process to form the alignment layer, which makes continuous manufacturing impossible, leading to an increase in production cost. Consequently, reverse mode PDLC films have not yet reached full commercialization.

As a solution to the drawbacks of conventional reverse mode PDLC films, the foundation for reverse mode PDLC films and manufacturing methods thereof has been proposed in Korean Patent No. 10-2425560, entitled "Reverse mode PDLC assembly for color realization without PI alignment layer" and Korean Patent No. 10-2424383, entitled "Method for manufacturing of color PDLC without PI alignment layer", which have filed and granted by the present applicant. In these patent documents, a technique is disclosed in which a dimethacrylate-based photocurable polymer, such as bisphenol A dimethacrylate, is used as the primary material for an alignment layer instead of a conventional polyimide (PI) alignment film, and a roll-to-roll micro-gravure continuous process is used to form an alignment surface base layer for forming multiple polymer walls with a pitch of less than 5 µm. This approach significantly reduces the production cost compared to conventional reverse mode PDLC films using a PI alignment film. However, despite this advancement, there still remain technical limitations. That is, the process requires the use of nematic liquid crystals with negative dielectric anisotropy, which are limited in type and relatively costly, rather than nematic liquid crystals with positive dielectric anisotropy, which are diverse in type, well-suited for mass production, and cost-effective, as liquid crystal molecules in a liquid crystal layer. In some cases, an additional chiral dopant doping process is required to form cholesteric liquid crystals. As a result, the selection range of applicable liquid crystals is narrow, making it difficult to manufacture a reverse mode PDLC film with various physical properties that flexibly meet diverse application needs. Furthermore, the cost gap between these reverse mode PDLC films and conventional normal PDLC films remains substantial. Most importantly, the prior disclosures do not provide a concrete solution regarding specific equipment, process configurations, and process conditions required to continuously carry out the entire manufacturing process that begins with a base film and ends with a final product.

In particular, regarding continuous process manufacturing technologies, Korean Patent Application Publication No. 10-2022-0130602 A, entitled "Method for manufacturing aligned liquid crystal film", discloses a technique for producing a film including an aligned liquid crystal layer and an optical layer using a roll-to-roll process. However, this disclosure is limited to specifying unit processes for bonding the aligned liquid crystal layer and the optical layer. Moreover, it pertains to a liquid crystal film for image display devices, not a reverse mode PDLC film, and thus does not provide an organic and integrated configuration of continuous manufacturing equipment or methods optimized for producing reverse mode PDLC films.

### Disclosure

### Technical Problem

Accordingly, the present disclosure has been made keeping in mind the above problems occurring in the related art, and an objective of the present disclosure is to provide a reverse mode PDLC film configured to maintain a transparent state with high visible light transmittance when no voltage is applied and to transition to a hazy state with low visible light transmittance when voltage is applied. By applying positive dielectric anisotropy nematic liquid crystals as the liquid crystal component of a liquid crystal layer rather than using negative dielectric anisotropy nematic liquid crystals that are limited in type and costly, or cholesteric liquid crystals that complicate the manufacturing process and are difficult to promote irregularity under voltage application, it is possible to provide a reverse mode PDLC film having horizontal alignment of liquid crystals that can meet various demands through combinations of at least two types of nematic liquid crystals, while enabling a significant reduction in manufacturing cost.

Another objective of the present disclosure is to provide a continuous process manufacturing technology for a reverse mode PDLC film which essentially includes an alignment layer for liquid crystal alignment in a voltage-off state. Specifically, provided are continuous process manufacturing equipment for a PDLC film including an alignment layer and a continuous process manufacturing method for a PDLC film, in which the entire manufacturing process, which begins with a drum on which a base film is wound and ends with a drum on which a final product in wound, can be performed in a continuous manner.

### Technical Solution

In order to accomplish the above objectives, the present disclosure provides a reverse mode PDLC film having horizontal alignment of liquid crystals, the reverse mode PDLC film being configured to maintain a transparent state with high visible light transmittance in the absence of applied voltage and to transition to a haze state with low visible light transmittance upon voltage application, the reverse mode PDLC film including: an alignment layer including a base film, an alignment-imparting layer formed by coating an acrylate film coating layer on the base film, and an electrode layer; and a liquid crystal layer bonded to the alignment layer and including nematic liquid crystals, a reactive monomer for forming a polymer network to maintain a uniform alignment of the nematic liquid crystals, and an additive, in which the nematic liquid crystals may include at least two types of positive dielectric anisotropy nematic liquid crystals having different dielectric anisotropy, and may be configured to maintain a horizontal arrangement parallel to the alignment layer in an electric field-off state.

At this time, the base film may be a PET film, and the acrylate film coating layer on the base film may be composed of an acrylate-based material that exhibits excellent formability and, upon curing, forms molecular structures that are arranged in a specific direction, such as bisphenol A dimethacrylate, which is a dimethacrylate-based photocurable polymer, and biphenyl-based monomers or composites with double bonds.

Moreover, the acrylate film coating layer may include bisphenol A dimethacrylate as a dimethacrylate-based photocurable polymer, and at least one long-wavelength photoinitiator selected from the group consisting of TPO, HMPP, and Darocure 1173 as a photoinitiator, and may be formed by irradiating light with a wavelength range of 380 to 420 nm at an intensity of 50 to 70 mW/cm² for an exposure time of 500 to 700 seconds.

At this time, a film thickness may be controlled to be between 5 and 10 µm using micro-gravure thin-film coating conditions, and a bonding surface of the alignment layer that is in contact with the liquid crystal layer may be manufactured to have parallel concave-convex groove pitches (in the form of concave-convex protrusions) with a regular interval of 1.0 to 10 µm.

Meanwhile, the electrode layer may be formed by depositing a conductive component on a surface of the alignment-imparting layer.

At this time, the electrode layer may be formed by depositing indium tin oxide (ITO) on a surface of the alignment layer under the conditions of a base pressure of ~1.0×10⁻⁵ Torr, a main pressure of ~5.0×10⁻³ Torr, a temperature of 80°C to 120°C, a DC current of 0.5 to 1.0 A, and an RF power of 150 to 250 W.

Meanwhile, the nematic liquid crystals may be a liquid crystal mixture of at least two types selected from the group of positive dielectric anisotropy nematic liquid crystals in which biphenyl, cyanobiphenyl, or terphenyl groups forms a main mesogenic group and a substance with high electronegativity, such as fluorine or chlorine, forms a terminal group.

At this time, an dielectric anisotropy Δε of the at least two types of nematic liquid crystals may satisfy the condition of 5≤Δε≤10.

Alternatively, a refractive index anisotropy Δn of the at least two types of nematic liquid crystals may satisfy the condition of 0.5≤Δn≤1.

Meanwhile, a first outer layer and a second outer layer may be respectively bonded to both sides of the liquid crystal layer. At least one of the first outer layer and the second outer layer may be the alignment layer that includes both the alignment-imparting layer and the electrode layer, a bonding surface of each of the first outer layer and the second outer layer facing the liquid crystal layer may be the electrode layer, and cross-sections of opposing surfaces of the first outer layer and the second outer layer that face each other with the liquid crystal layer interposed therebetween may have different shapes.

At this time, among the opposing surfaces of the first outer layer and the second outer layer that face each other with the liquid crystal layer interposed therebetween, the opposing surface of the first outer layer may include micro-scale concave-convex grooves arranged at a regular interval, while the opposing surface of the second outer layer may be formed flat.

Moreover, the reactive monomer may be at least one selected from the group of photopolymerizable monomers having structural formulas of C₃₃H₃₂O₁₀, C₃₇H₃₆O₁₄, C₃₉H₄₄O₁₀, and C₅₀H₄₆O₂₀.

At this time, the liquid crystal layer may include 20 to 25 parts by weight of the reactive monomer for forming a polymer network, based on 100 parts by weight of the nematic liquid crystals.

At this time, the additive may include a photocurable acrylate.

At this time, the photocurable acrylate may include a silicon-doped methacrylate component.

At this time, the photocurable acrylate as the additive may be included in an amount of 10 to 15 parts by weight, based on 100 parts by weight of the nematic liquid crystals.

Furthermore, the additive may include at least one UV photoinitiator selected from the group consisting of long wavelength initiators such as TPO, HMPP, and Darocure 1173.

At this time, the liquid crystal layer may be manufactured by mixing 20 to 25 parts by weight of the reactive monomer, 10 to 15 parts by weight of the photocurable acrylate, and 1 to 3 parts by weight of the UV photoinitiator based on 100 parts by weight of the nematic liquid crystals, and then forming a polymer network by irradiating the mixture with light in a wavelength range of 380 to 420 nm at an intensity of 5 to 10 mW/cm² for an exposure time of 300 to 600 seconds, while the nematic liquid crystals are maintained in an aligned state.

The present disclosure provides continuous process manufacturing equipment for manufacturing a PDLC film including an alignment layer, the PDLC film including a liquid crystal layer for maintaining a transparent state with high visible light transmittance in the absence of applied voltage and transitioning to a haze state with low visible light transmittance upon voltage application, and the alignment layer for allowing liquid crystals of the liquid crystal layer to have a uniform alignment in a voltage-off state, the continuous process manufacturing equipment including: a gravure roll having a gravure printing surface for performing coating of an acrylate film coating layer containing a photocurable component on one surface of a first base film; a first photocuring irradiation device located on a downstream side of the gravure roll and curing the acrylate film coating layer on the first base film; a liquid crystal mixture application device located on a downstream of the first photocuring irradiation device and applying a liquid crystal mixture constituting the liquid crystal layer onto an upper surface of the acrylate film coating layer on the first base film; an opposing-surface press roll located on a downstream side of the liquid crystal mixture application device and bonding together the first base film and the second base film having an electrode layer formed thereon; and a second photocuring irradiation device located on a downstream side of the opposing-surface press roll and curing the liquid crystal mixture while the first base film and the second base film are bonded together.

At this time, at least one of the first base film and the second base film may be a PET film.

Meanwhile, the gravure roll may have parallel concave-convex protrusions formed with a pitch of 1.0 to 10 µm.

At this time, the gravure roll may be plated with chrome.

Meanwhile, the acrylate film coating layer may include bisphenol A dimethacrylate as a dimethacrylate-based photocurable polymer, and at least one long-wavelength photoinitiator selected from the group consisting of TPO, HMPP, and Darocure 1173 as a photoinitiator, and the first photocuring irradiation device may irradiate light with a wavelength range of 380 to 420 nm at an intensity of 50 to 70 mW/cm² for an exposure time of 500 to 700 seconds.

Meanwhile, the continuous process manufacturing equipment may further include: an electrode layer formation device located between the downstream side of the first photocuring irradiation device and an upstream side of the liquid crystal mixture application device, and forming an electrode layer on a surface of the acrylate film coating layer on the first base film.

At this time, the electrode layer formation device may be a device that vacuum deposits indium tin oxide (ITO), and may perform a deposition process under the conditions of a base pressure of ~1.0×10⁻⁵ Torr, a main pressure of ~5.0×10⁻³ Torr, a temperature of 80°C to 120°C, a DC current of 0.5 to 1.0 A, and an RF power of 150 to 250 W.

Meanwhile, the liquid crystal mixture application device may be a slot die coater including a liquid crystal mixture tank, a pump, and a slot die.

Moreover, the liquid crystal mixture may include liquid crystal molecules, a reactive monomer, a photoreactive acrylate, and at least one long-wavelength photoinitiator selected from the group consisting of TPO, HMPP, and Darocure 1173 as a photoinitiator.

The second photocuring irradiation device may irradiate light with a wavelength range of 380 to 420 nm at an intensity of 5 to 10 mW/cm² for an exposure time of 300 to 600 seconds.

The present disclosure provides a continuous process manufacturing method for a PDLC film including an alignment layer, the continuous process manufacturing method including: a step of forming an acrylate film coating layer having polymer walls with a pitch of 1.0 to 10 µm using a gravure roll with protrusions formed at a regular interval on a surface of a first base film drawn from a first drum on which the first base film is wound; a first photocuring step of curing the acrylate film coating layer; a liquid crystal mixture application step of applying a liquid crystal mixture constituting a liquid crystal layer onto a surface of the acrylate film coating layer that has undergone the first photocuring step; a lamination step of bonding a second base film drawn from a second drum on which the second base film is wound to the liquid crystal mixture coating layer on the first base film that has undergone the liquid crystal mixture application step in a face-to-face manner; and a second photocuring step of performing light irradiation so that the liquid crystal mixture after the lamination step is cured to form the liquid crystal layer.

At this time, at least one of the first base film and the second base film may be a PET film.

At this time, at least one of the first base film and the second base film may have an electrode layer formed on at least one surface thereof before being wound on the first drum or the second drum.

Meanwhile, the acrylate film coating layer may include bisphenol A dimethacrylate as a dimethacrylate-based photocurable polymer, and at least one long-wavelength photoinitiator selected from the group consisting of TPO, HMPP, and Darocure 1173 as a photoinitiator, and the first photocuring irradiation device may irradiate light with a wavelength range of 380 to 420 nm at an intensity of 50 to 70 mW/cm² for an exposure time of 500 to 700 seconds.

Meanwhile, the continuous process manufacturing method may further include: an electrode layer formation step of forming an electrode layer on the surface of the acrylate film coating layer on the first base film after the first photocuring step and before the liquid crystal mixture application step.

At this time, the electrode layer formation step may include an indium tin oxide (ITO) vacuum deposition step. The ITO vacuum deposition step may be performed under the conditions of a base pressure of ~1.0×10⁻⁵ Torr, a main pressure of ~5.0×10⁻³ Torr, a temperature of 80°C to 120°C, a DC current of 0.5 to 1.0 A, and an RF power of 150 to 250 W.

### Advantageous Effects

By the configuration described above, a reverse mode PDLC film having horizontal alignment of liquid crystals and continuous process manufacturing equipment and method for a reverse mode PDLC film including an alignment layer according to the present disclosure have the following effects.

First, by adopting positive dielectric anisotropy nematic liquid crystals, which are available in various types and relatively easy to procure, and forming an alignment-imparting layer via an acrylate film coating, which enables self-structuring and liquid crystal alignment, on a PET film instead of using a polyimide film, it is possible to implement a continuous roll-to-roll micro-gravure manufacturing process. As a result, the present disclosure can significantly improve productivity compared to conventional reverse mode PDLC films, which are known to be impossible to manufacture in a continuous process.

Second, by employing a liquid crystal composition formed by mixing at least two types of liquid crystals having different physical properties, it is possible to manufacture a reverse mode PDLC film with a wide range of characteristics tailored to diverse demands, such as those for building or automotive applications, through various combinations of material properties.

Third, by implementing a technology that adopts "horizontal alignment of liquid crystals" in a voltage-off state rather than "vertical alignment of liquid crystals", which is the conventional technology for reverse mode PDLC films, it is possible to realize a sufficiently transparent mode through precise alignment techniques, and significantly increase the irregularity in liquid crystal arrangements in a voltage-on state due to the characteristics of liquid crystals and the unique structure of an electrode layer. As a result, this enables the manufacture of a reverse mode PDLC film with a clear transition between a transparent mode and an opaque mode.

Fourth, by applying a PET film, etc. as a base film and forming an alignment layer via a self-structured acrylate film coating on the base film, it is possible to provide a clearly defined roll-to-roll continuous process technology and step-specific techniques optimized for flexible reverse mode PDLC films. This enables the manufacture of a reverse mode PDLC film with greatly increased productivity and greatly reduced manufacturing cost.

### Description of Drawings

FIG. 1 is a conceptual diagram illustrating an interlayer structure of a reverse mode PDLC film according to a preferred embodiment of the present disclosure.
FIG. 2 is a conceptual diagram illustrating transmission and scattering states of visible light in a transparent mode and a haze mode, shown in a sectional view of the layer structure according to the embodiment of FIG. 1.
FIG. 3 is a conceptual diagram illustrating a micro-gravure roll-to-roll process that can be applied in manufacturing a groove of an alignment layer according to the present disclosure.
FIG. 4 is a view illustrating a prototype test images showing transition from a transparent state to a haze state upon switching between voltage-off and voltage-on conditions, as observed in the reverse mode PDLC film manufactured according to an experimental example of the present disclosure.
FIG. 5 is a process diagram illustrating a first embodiment of continuous process manufacturing equipment for a PDLC film including an alignment layer according to the present disclosure.
FIG. 6 is a process diagram illustrating a second embodiment of continuous process manufacturing equipment for a PDLC film including an alignment layer according to the present disclosure.
FIG. 7 is a partially enlarged view illustrating a gravure roll of the first or second embodiment of the manufacturing equipment according to the present disclosure.
FIG. 8 is a view illustrating an interlayer structure of a PDLC film including an alignment layer manufactured through a continuous process according to the first embodiment of the manufacturing equipment according to the present disclosure.

### Best Mode

Hereinafter, the specific configurations for implementing a reverse mode PDLC film having horizontal alignment of liquid crystals and continuous manufacturing equipment and method for a PDLC film including an alignment layer and the effects derived therefrom will be described in detail with reference to preferred embodiments of the present disclosure in conjunction with the accompanying drawings and experimental examples.

Here, all terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Therefore, embodiments described in the present specification and configurations shown in the drawings are only the most preferred embodiments of the present disclosure and do not encompass the inventive concept. Accordingly, various equivalent modifications and substitutions may be possible at the time of this filing without departing from the scope of the present disclosure.

A reverse mode PDLC film having alignment of liquid crystals manufactured according to the present disclosure is a reverse mode PDLC film configured to maintain a transparent state with high visible light transmittance in the absence of applied voltage, and to transition to a haze state with low visible light transmittance upon voltage application, opposite to the behavior of a normal mode PDLC film.

Therefore, unlike a conventional normal mode PDLC film that typically does not require an alignment layer, the PDLC film manufactured according to the present disclosure needs to essentially include an alignment layer. This is because, in order to maintain a transparent state with high visible light transmittance in the absence of applied voltage, liquid crystals in a liquid crystal layer need to be maintained in an ordered and parallel arrangement.

To achieve such liquid crystal alignment, conventional reverse mode PDLC films adopting alignment layers made of polyimide materials have been primarily proposed, similar to those used in LCD panels, and some of these have even been commercialized.

However, conventional polyimide (PI) alignment films have limitations, including high material costs and the requirement for a rubbing process performed on panel units to form fine alignment grooves, making a continuous manufacturing process unfeasible and significantly reducing mass production efficiency. As a result, this has become a major factor hindering the widespread commercialization of reverse mode PDLC films, especially when compared to normal mode PDLC films, which do not require an alignment layer at all.

Therefore, one of the key features of the present disclosure is that an alignment layer 11 is formed by coating an acrylate film coating on a PET film, rather than adopting a polyimide film conventionally used as an alignment layer as described above. The acrylate film coating offers excellent processability and forms a self-structure after coating, which can provide alignment properties for liquid crystals 25.

That is, in a preferred embodiment of the present disclosure, which will be described in more detail later, the step of performing an acrylate film coating process on a base film 1 made of a PET film using a gravure roll 200 may involve the use of bisphenol A dimethacrylate, which is a dimethacrylate-based photocurable polymer, as the specific acrylate material. This acrylate-based material, composed of biphenyl-based monomers or composites with double bonds, exhibits excellent formability and, upon curing, forms molecular structures that are arranged in a specific direction, making it highly suitable as a PET-based composite alignment layer material.

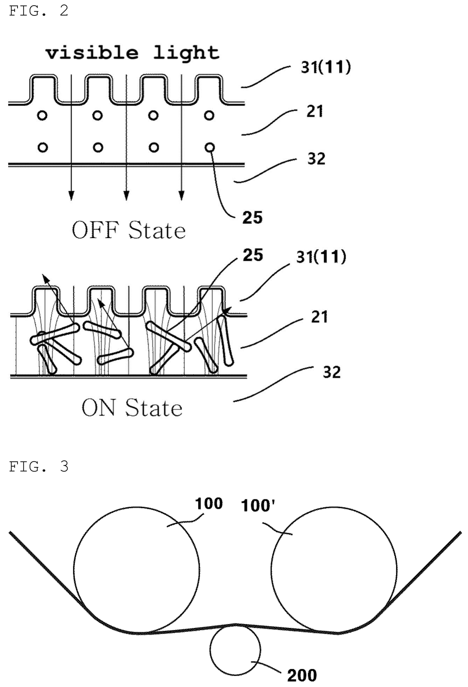

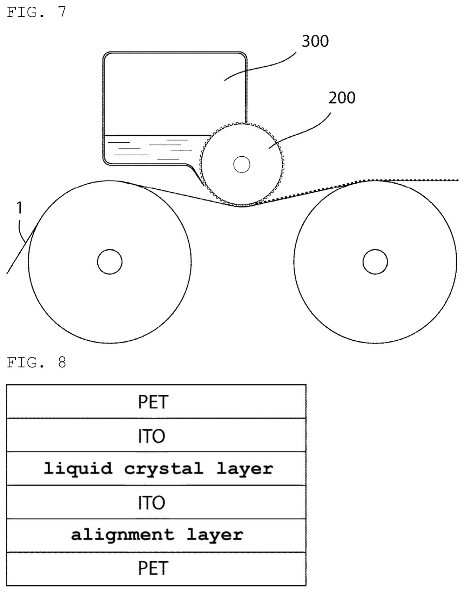

In addition, as illustrated in FIG. 3, during the film coating process, a micro-gravure roll-to-roll process may be employed, in which the gravure roll 200 is positioned between guide rollers 100, 100' to form fine groove patterns on a surface of a continuously fed sheet. Through this process, it is possible to form regularly pitched concave-convex grooves 22 on the PET film used as the base film, with a pitch of about 5 µm. This will be described in more detail with reference to a specific embodiment of the present disclosure illustrated in FIG. 7 and related figures.

Meanwhile, the alignment layer 11 may further include an electrode layer 15 attached in the form of a separate film or formed in an integrated form.

The electrode layer 15 may be composed of indiumtin oxide (ITO), which is a typical transparent electrode material.

That is, among the materials developed so far, ITO is most widely used as a transparent electrode material due to its excellent transparency, high electrical conductivity, and good processability. ITO is a material fabricated by doping SnO₂ in In₂O₃. An ITO layer may be positioned on either surface of the alignment layer 11 without significant issues in applying voltage between opposing surfaces. However, in order to optimize the overall thickness of the alignment layer 11 and enable more effective transmission of the electric field to the liquid crystals 25 within a liquid crystal layer 21, it is preferable to form the ITO layer on a surface of the alignment layer 11 that is in direct contact with the liquid crystal layer 21, using a deposition method that integrates it with the alignment layer.

The formation of the electrode layer 15 will be described in more detail later in the description of an electrode layer formation device 50, and may be accomplished by depositing it on the surface of the alignment layer 11.

However, in the case where the ITO layer is bonded using a film lamination method, it does not cause any significant functional problems even when it is bonded to the opposite side of the surface of the alignment layer 11, the surface being in direct contact with the liquid crystal layer 21. Therefore, the positioning of the ITO layer may be freely adjusted depending on process design considerations or specific requirements.

After forming the alignment layer 11 as described above, the liquid crystal layer 21 may be bonded to the alignment layer 11 and may be configured as follows.

First, according to the characteristic configuration of the present disclosure, the liquid crystals 25, which are a core component included in the liquid crystal layer 21, may be composed only of nematic liquid crystals having positive dielectric anisotropy.

Liquid crystal 25 molecules usually have a rod shape (mesogen) containing a ring structure, and they exhibit different physical properties along the longitudinal and transverse axes.

Among these physical properties, the difference between the dielectric constant along the longitudinal axis and that along the transverse axis is referred to as dielectric anisotropy (Δε). A liquid crystal with a positive Δε is called a positive dielectric anisotropy liquid crystal, or simply a positive-type liquid crystal, while a liquid crystal with a negative Δε is called a negative dielectric anisotropy liquid crystal, or simply a negative-type liquid crystal.

In the case of liquid crystals with positive dielectric anisotropy, when electric field lines are formed in an electric field as voltage is applied, the liquid crystals tend to rotate in a direction that matches (parallel to) the direction of the electric field. On the contrary, liquid crystals with negative dielectric anisotropy tend to rotate in the opposite direction.

Therefore, conventional reverse mode PDLC films typically adopt the following mechanism. The liquid crystals 25 are arranged in a direction perpendicular to the liquid crystal layer 21 (i.e., transverse to the liquid crystal layer) when no voltage is applied. Upon voltage application, the liquid crystals 25 rotate in a direction transverse to the electric field, thereby interfering with the path of visible light passing approximately perpendicularly through the liquid crystal layer 21, resulting in light scattering.

However, imparting transparency to the liquid crystal layer 21 is not significantly related to whether the liquid crystal molecules are arranged vertically or horizontally, and sufficient transparency may be achieved as long as the liquid crystal molecules are uniformly arranged and positioned in an ordered and parallel manner.

However, for negative dielectric anisotropy nematic liquid crystals that rotate horizontally under voltage application from a vertical arrangement state, even when the rotation angle based on dielectric anisotropy is nearly the same among identical types of nematic liquid crystals, the diversity in rotation directions leads to a significant increase in molecular alignment irregularity across various angles transverse to the light transmission direction, resulting in an effective transition to a haze state. On the contrary, for positive dielectric anisotropy nematic liquid crystals that rotate from a horizontal to a vertical state, the molecules tend to rotate and align in the same direction as the visible light transmission direction, resulting in relatively lower opacity following the transition.

To solve this problem, the present disclosure is characterized by the use of a mixture of at least two different types of positive dielectric anisotropy nematic liquid crystals having different dielectric anisotropy values.

When the dielectric anisotropy of liquid crystals is different, the liquid crystal 25 molecules rotate at different angles under the same electric field, thereby further increasing the irregularity in molecular arrangements under electric field application.

That is, as illustrated in FIG. 2, in an OFF State where no electric field is applied, the liquid crystals 25 are arranged in the same direction parallel to the horizontal direction of the liquid crystal layer 21, causing minimal scattering in the path of visible light passing through the liquid crystal layer 21, thereby maintaining a transparent state.

At this time, as illustrated at the lower side of the drawing, when an electric field is applied, in the case where various types of liquid crystal molecules with different dielectric anisotropy exits mixed together, the rotation angles thereof may also vary, significantly increasing the irregularity in the arrangement of the liquid crystals 25 and increasing light scattering, resulting in increased opacity.

Moreover, when the shape of the electrode layer 15, i.e. the cross-sectional shape of the electrode layer 15 included in the alignment layer 11, is not flat and parallel but formed differently, such irregularity may be further increased. As illustrated at the lower side of FIG. 2 (i.e., an ON State), where electrode layers 15 facing each other are depicted with an uneven surface and a flat surface facing each other, the electric field lines indicated by thin lines in the liquid crystal layer 21 are refracted and incident in various directions. Consequently, the liquid crystal 25 molecules affected by the electric field are also irregularly rotated and arranged at more various angles.

Meanwhile, as a method for easily forming such opposing surfaces of different shapes, a technique may be applied in which the alignment layer 11 having a bonding surface with an uneven portion already formed thereon as described above is bonded to one surface of the liquid crystal layer 21 to serve as a first outer layer 31, while a second outer layer 32 having a flat surface with an electrode layer 15 formed thereon is bonded to the other surface.

That is, according to the present disclosure, the transition of the horizontally aligned positive dielectric anisotropy nematic liquid crystals in a voltage-off state to a haze state in an opaque mode upon voltage application is achieved by two main factors. First, a mixture of various types of nematic liquid crystals with different dielectric anisotropy is used. Second, as the surface shapes of the electrode layers 15 facing each other are formed differently and irregularly, the resulting electric field becomes irregular. As a result, even though the liquid crystals rotate in a vertical direction from a horizontally aligned state, an effective transition to a haze state is possible compared to cases using negative dielectric anisotropy liquid crystals.

In addition to the dielectric anisotropy among the above-described physical properties of liquid crystals, the refractive index may be cited as a physical property that affects the transparency or opacity of the liquid crystals. The refractive index of liquid crystals also exhibits anisotropy.

That is, when light travels from one medium to another, the difference in density between the mediums causes a difference in speed at which light passes from one medium to another. This phenomenon is called refraction of light. Refraction is quantified by a constant called the refractive index. The refractive index varies depending on the vibration direction of light. When light passes through liquid crystal molecules, the liquid crystal molecules exhibit different electron densities depending on the axis direction thereof, resulting in different phase shifts for the light along the long and short axes. Here, the difference between the refractive index in the direction of the long axis and that in the direction of the short axis is referred to as refractive index anisotropy, which is expressed as Δn.

Ultimately, the difference in dielectric anisotropy leads to variation in degree of electrical control (rotation) among different liquid crystal molecules, while the difference in refractive index anisotropy causes a diversity of optical differences. Therefore, in addition to the first factor regarding the diversity of dielectric anisotropy among various types of liquid crystal molecules and the second factor regarding the irregularity in the surface shapes of the electrode layers 15 facing each other, the third factor regarding the diversity of refractive index anisotropy among various types of liquid crystal molecules can further enhance opacity.

From this point of view, the nematic liquid crystals may use a liquid crystal mixture of a blend of at least two types of single liquid crystals selected from the group of positive dielectric anisotropy nematic liquid crystals in which biphenyl, cyanobiphenyl, or terphenyl group forms the main mesogenic group and a substance with high electronegativity, such as fluorine or chlorine, is located at the terminal group.

At this time, it is preferable that the dielectric anisotropy Δε of the above-described at least two types of nematic liquid crystals satisfies the condition of 5≤Δε≤10. However, when the dielectric anisotropy is less than 5, the difference in total amount of charge between the long and short axes of the liquid crystal molecules is small, so the movement of the liquid crystals caused by the difference in the dielectric anisotropy upon application of electricity becomes slow. Consequently, the tilt angle of the liquid crystal molecules decreases upon application of electricity, making it difficult to achieve an appropriate level of light scattering. On the other hand, when it exceeds 10, the oppositely charged ions do not dissipate quickly, leading to a slower switching speed, i.e., the speed at which the liquid crystals return to a transparent state after the electricity is removed becomes undesirably slow.

Similarly, it is preferable that the refractive index anisotropy Δn of the at least two types of nematic liquid crystals satisfies the condition of 0.5≤Δn≤1. When the refractive index anisotropy is less than 0.5, the refractive index deteriorates when light passes through the liquid crystal molecules in a scattering mode, thereby reducing the light scattering efficiency. On the other hand, when it exceeds 1, the difference in the front and side refractive indices of light passing through the liquid crystal molecules becomes too large, resulting in a problem called "side haze" where haze appears when observing the PDLC film from the side in its transparent state.

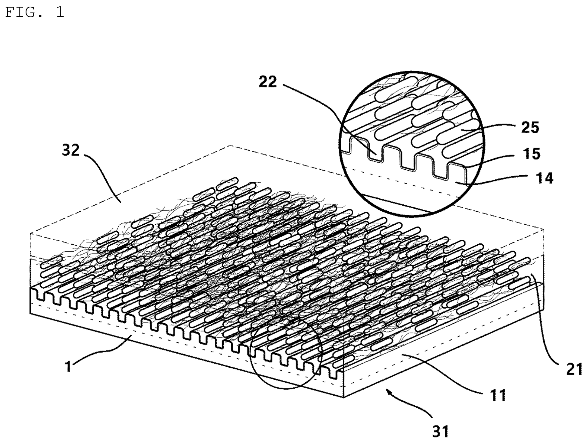

The biggest difference between the liquid crystals constituting the liquid crystal layer 21 according to the present disclosure and those of a conventional normal PDLC film is that, in the case of the normal PDLC, the liquid crystals (molecules) exist in an irregularly arranged state that can flow within droplets randomly dispersed within a polymer matrix, whereas the liquid crystals according to the present disclosure exist in the form of independent molecules supported by a polymer network, as illustrated in FIG. 1.

That is, as described above, the ordered horizontal arrangement of the liquid crystals 25 and physical stability, etc. are significantly affected by the configuration of the alignment layer 11 adjacent to the liquid crystal layer 21. In addition, a polymer material for forming a polymer network and the type and content of liquid crystals also have a significant impact.

The polymer network according to the present disclosure may be formed by reacting a photopolymerizable material, commonly called a reactive monomer (RM), under UV irradiation. From the above-described viewpoint, considering the relationship with the liquid crystals applied to the present disclosure, the reactive monomer may be at least one selected from the group of photopolymerizable monomers having structural formulas of C₃₃H₃₂O₁₀, C₃₇H₃₆O₁₄, C₃₉H₄₄O₁₀, and C₅₀H₄₆O₂₀.

The reactive monomer for forming a horizontal polymer network may be mixed in a liquid state in an amount of about 20 to 25 parts by weight, preferably about 22 parts by weight, based on 100 parts by weight of the nematic liquid crystals. The above range may be selected within the ratio at which the monomer can be mixed with the liquid crystals while maintaining transparency. When the amount is less than 20 parts by weight, the liquid crystals are mixed in a large amount relative to the polymer network, making it difficult to form a stable polymer structure after curing, and resulting in significantly reduced durability against external physical impacts. On the other hand, when it exceeds 25 parts by weight, the amount of liquid crystals available to form the network becomes relatively small, leading to reduced light scattering efficiency.

Meanwhile, a photocurable acrylate may be further included as an additive to the liquid crystal layer 21. This is because the liquid crystal layer 21 also functions as a type of adhesive component that increases interlayer bonding strength through photocuring.

In addition, as the photocurable acrylate, a silicon-doped methacrylate may be further included. This enhances the above-described interlayer bonding strength, and at the same time, ensures waterproofing, water-repelling, and oil-repelling effects of the liquid crystal layer 21 at a cut surface or edge area, thereby effectively preventing moisture permeability problems occurring at a trimmed or cut surface when the product is provided in film form.

Meanwhile, it is preferable to further include a photoinitiator for photopolymerization reaction of polymer network in the liquid crystal layer 21, photocuring of acrylate, etc. As the photoinitiator, at least one UV photoinitiator selected from the group consisting of long-wavelength initiators such as TPO, HMPP, and Darocure 1173 may be included in an amount of 1 to 3 parts by weight.

That is, the liquid crystal layer 21 containing all of liquid crystals, a reactive monomer, an acrylate, and an initiator may be manufactured in the following manner. 20 to 25 parts by weight of the reactive monomer, 10 to 15 parts by weight of the photocurable acrylate, and 1 to 3 parts by weight of the UV photoinitiator are mixed based on 100 parts by weight of the nematic liquid crystals. Then, a polymer network is formed by irradiating the mixture with UV light in a wavelength range of 380 to 420 nm at an intensity of 5 to 10 mW/cm² for an exposure time of 300 to 600 seconds, while the nematic liquid crystals are maintained in an aligned state.

Consequently, in the process of interposing and bonding the liquid crystal layer 21, which is a liquid crystal mixture layer composed of liquid crystals and other mixtures, between the first outer layer 31 in which the alignment layer 11 and the electrode layer 15 are formed on a PET film and the second outer layer 32 in which at least the electrode layer 15 is formed on a PET film, curing of both the alignment layer 11 and the liquid crystal layer 21 is achieved by UV photocuring. This clearly ensures the applicability of a roll-to-roll-based continuous manufacturing process, which will be described in more detail later.

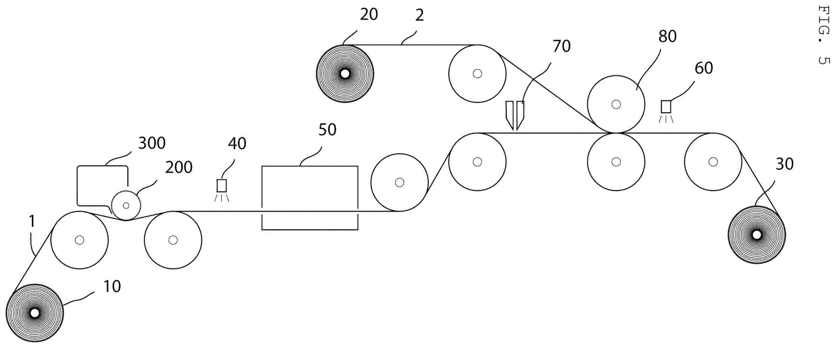

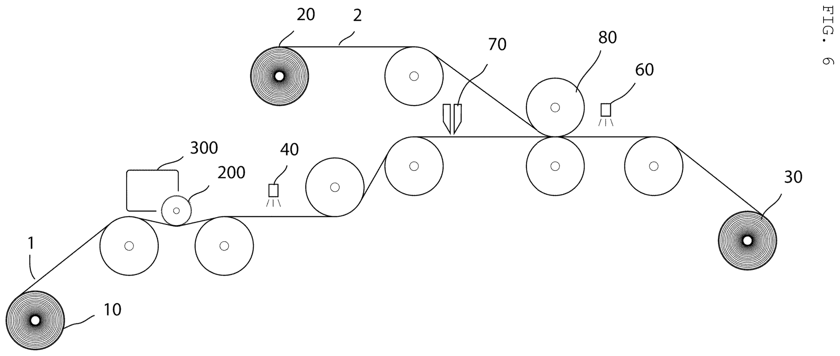

Hereinafter, preferred embodiments of manufacturing equipment according to the present disclosure, which is designed to manufacture a reverse mode PDLC film including an alignment layer using a continuous roll-to-roll process, will be described with reference to process diagrams of FIGS. 5 and 6, etc.

As illustrated in FIG. 5, in a first embodiment of manufacturing equipment according to the present disclosure, a first base film 1 wound on a first drum 10 and a second base film 2 wound on a second drum 20 are unwound from the respective drums, subjected to the steps defined by the present disclosure, and are bonded together on an opposing-surface press roll 80. The bonded films are then cured by a second photocuring irradiation device 60 and finally wound on a third drum 30. This enables the entire manufacturing process, which begins with a raw material film and ends with a final product, to be carried out as a continuous process.

Each process step will be described in greater detail below.

According to the above-described features of the present disclosure, a PET film may be used as the base film since it allows for easy formation of an alignment layer via an acrylate film coating that forms a self-structure after coating on a surface while also imparting alignment properties to liquid crystals. In addition, the PET film offers advantages in terms of mechanical properties and cost.

That is, according to the present disclosure, the step of performing an acrylate film coating process on the first base film 1 such as a PET film using the gravure roll 200 may involve the use of bisphenol A dimethacrylate, which is a dimethacrylate-based photopolymerizable polymer, as the specific acrylate material. More specifically, the coating process may be achieved by forming a film on the PET base film 1 by inducing a radical polymerization reaction using an acrylate-based material composed of biphenyl-based monomers or complexes with double bonds, such as bisphenol A dimethacrylate, to which a long-wavelength photoinitiator such as TPO, HMPP, Darocure 1173, etc. is added. The film thickness is controlled to be between 5 and 10 µm using micro-gravure thin-film coating conditions.

At this time, as illustrated in FIG. 7, which is an enlarged view of a portion of the gravure roll 200 of FIG. 5, the acrylate film coating process may be performed using the gravure roll 200 in which pitches in the form of parallel concave-convex protrusions are formed on a surface thereof at a regular interval of 1.0 to 10 µm. By interposing the micro-gravure roll 200 between guide rollers, fine groove patterns are continuously formed on a surface of a continuously fed sheet. Accordingly, through this micro-gravure roll-to-roll process, a film having an alignment layer with polymer walls formed at a regular interval of about 5 µm in pitch may be produced, using the PET film as the first base film 1.

That is, as the dimethacrylate-based photocurable polymer, which is the material of an alignment-imparting layer 14 formed in the shape of concave-convex grooves 22 to define a polymer wall surface, bisphenol A dimethacrylate, etc. is filled in a solution tank 300 of a gravure coating line, and then applied onto the base film 1 in a regular pattern with a 5µm pitch by the gravure roll 200. The coating layer is immediately cured by a first photocuring irradiation device 40, which will be described later. Thus, unlike conventional polyimide alignment films that require high-temperature processing and post-rubbing to form alignment patterns on unit films, this method eliminates the need for such steps, enabling a continuous and simplified alignment layer formation process.

At this time, as for the photocuring conditions, exposure to light with a wavelength range of 380 to 420nm at an intensity of 50 to 70mW/cm² for an exposure time of 500 to 700 seconds is suitable. Under these conditions, a film coating with a thickness of 5 to 10µm and a concave-convex groove pattern with a pitch of 1.0 to 10 µm, preferably within 5 µm, may be formed.

Here, when the film thickness is less than 5 µm, it may not provide sufficient liquid crystal alignment properties. On the other hand, when it exceeds 10 µm, the overall thickness of the coating layer increases, which may cause unnecessary haze in a transparent state.

In addition, when the pitch of the concave-convex grooves defining the polymer walls of the alignment layer exceeds 10 µm, the alignment effect deteriorates. On the other hand, forming a pitch of less than 1 µm has physical challenges. Thus, in this method, a pitch of about 5 µm is considered appropriate.

At this time, it is preferable that the gravure roll 200 is plated with chrome. The use of the chrome-plated gravure roll 200 as a coating roll is preferable because it is highly resistant to external corrosion and can implement excellent straightness (with a tolerance of about 0.01 µm).

At this time, the reason why the acrylate film coating layer includes a long-wavelength initiator such as TPO, HMPP, or Darocure 1173 as a photoinitiator together with bisphenol A dimethacrylate, etc., is that the use of a short-wavelength initiator prevents damage to the liquid crystal layer from short-wavelength UV light and also allows for easier control of the curing speed.

That is, compared to the polymer blend of the liquid crystal layer according to the present disclosure, the acrylate-based material used for forming the alignment layer has a higher molecular weight and forms a more complex chain structure, which facilitates the expression of alignment properties of the acrylate. However, this is difficult to achieve with low light intensity and short exposure time alone. Therefore, in the first photocuring irradiation device configured with the long-wavelength initiator, the optimized photocuring conditions are derived as follows: light with a wavelength range of 380 to 420 nm, which is long-wavelength UV that is advantageous for forming branches in the liquid crystal alignment layer as a reactive energy source, an intensity of 50 to 70 mW/cm², and an exposure time of 500 to 700 seconds.

Meanwhile, each of the first base film 1 and the second base film 2 may further include an electrode layer 15 such as ITO attached in the form of a separate film or formed in an integrated form.

Accordingly, in the first embodiment illustrated in FIG. 5, a configuration is exemplified in which an electrode layer formation device 50 is provided on the downstream side of the first photocuring irradiation device 40 for the first base film 1.

The electrode layer formation device 50 is located on the downstream side after the acrylate film coating layer (alignment layer) is cured through the first photocuring irradiation device 40, and thus forms an electrode layer on a surface of the alignment layer.

The electrode layer formation device 50 is a device for vacuum depositing indium tin oxide (ITO), and may perform the deposition process under the conditions of a base pressure of ~1.0×10⁻⁵ Torr, a main pressure of ~5.0×10⁻³ Torr, a temperature of 80°C to 120°C, a DC current of 0.5 to 1.0 A, and an RF power of 150 to 250 W, and more preferably, under the conditions of a base pressure of ~1.0×10⁻⁵ Torr, a main pressure of ~5.0×10⁻³ Torr, a temperature of 100°C, a DC current of 0.75 A, and an RF power of 200 W.

The reason for setting the deposition process conditions in this way is that when the pressure is lower or higher than the above range, an even ITO deposition surface may not be formed, and when the temperature and the current exceed the above range, the strength of an ITO layer deteriorates, which may cause the ITO layer to break during rolling and bending.

By forming the ITO layer via vacuum deposition rather than attaching a separate film on the surface of the alignment layer, the above-described advantageous effects can be obtained.

Meanwhile, in a second embodiment of manufacturing equipment according to the present disclosure illustrated in FIG. 6, a configuration is exemplified in which an electrode layer formation device 50 on the downstream side of a first photocuring irradiation device 40 for a first base film is excluded. Despite the advantageous effects described above, intervening a vacuum deposition device in the process equipment path may increase equipment costs and operational complexity. Therefore, in the case of configuring continuous process manufacturing equipment as illustrated in the second embodiment of FIG. 6, each of a first base film 1 and a second base film 2, which are fed in a wound state from a first drum 10 and a second drum 20, may be configured to include an ITO layer that is formed in advance by a film attachment method or a surface deposition method.

Thereafter, the step of applying a liquid crystal mixture by a liquid crystal mixture application device 70 may be performed to form a liquid crystal layer 21. As liquid crystals included in the liquid crystal mixture, it is preferable to use a blend of at least two types of liquid crystal molecules having different dielectric anisotropy and/or refractive anisotropy so that the liquid crystal molecules uniformly aligned by the alignment layer exhibit non-uniform alignment upon voltage application.

Meanwhile, the liquid crystal layer 21 according to the present disclosure may be applied in the form of a liquid crystal mixture in which photocurable acrylates further including a silicon-doped methacrylate are additionally blended, so that, in addition to the primary function of switching between transparent and opaque modes based on the change in liquid crystal alignment upon voltage application, it also serves to more firmly bond the first and second base films together.

The liquid crystal mixture application device 70 used in the step of applying the liquid crystal mixture may be configured as a slot die coater including a liquid crystal mixture tank, a pump, and a slot die. As a device for forming the liquid crystal layer, the slot die coater offers advantages such as ensuring a stable discharge amount, enabling uniform coating at low thicknesses, and ensuring a stable flow rate and flow viscosity even during long-term coating operations.

A lamination process is performed by an opposing-surface press roll 80 on the downstream side of the liquid crystal mixture application device 70 that performs the step of applying the liquid crystal mixture.

That is, the second base film 2 drawn from the second drum 2 is bonded to an opposing surface of the first base film 1, on which the alignment layer 11 and the electrode layer 15 have been formed and the liquid crystal layer 21 has been applied, by the opposing-surface press roll 80 with precise pressure and spacing. The second base film 2 is also bonded in a state in which at least an electrode layer 15 has been included.

It is preferable that the liquid crystal layer 21 in a bonded state further includes a photoinitiator in addition to liquid crystals and a reactive monomer for photopolymerization reaction of polymer network, photocuring reaction of acrylate, etc. As the photoinitiator, a UV photoinitiator including at least one long-wavelength photoinitiator selected from the group consisting of TPO, HMPP, and Darocure 1173 may be included in an amount of 1 to 3 parts by weight.

That is, the liquid crystal layer containing all of liquid crystals, a reactive monomer, an acrylate, and an UV photoinitiator may be manufactured in the following manner. 20 to 25 parts by weight of the reactive monomer, 10 to 15 parts by weight of the photocurable acrylate, and 1 to 3 parts by weight of the UV photoinitiator are mixed based on 100 parts by weight of the nematic liquid crystal mixture. Then, a polymer network is formed by irradiating the mixture with UV light in a wavelength range of 380 to 420 nm at an intensity of 5 to 10 mW/cm² for an exposure time of 300 to 600 seconds, while the nematic liquid crystals are maintained in an aligned state. This second photocuring step may be performed by a second photocuring irradiation device 60 located on the downstream side of the opposing-surface press roll 80 after the above-described lamination step by the opposing-surface press roll 80.

The above-described light irradiation conditions of the second photocuring irradiation device 60 are preferable in terms of protecting the liquid crystal layer from damage caused by short-wavelength UV, promoting stable network formation in the liquid crystal layer under low light intensity, and preventing under-curing that may occur with exposure times shorter than 200 seconds.

As illustrated in FIG. 8, the film that has undergone the second photocuring step has a sectional structure in which the PET base films are located at the outermost sides, and the alignment layer, the electrode layer, the liquid crystal layer, and the electrode layer are sequentially stacked on the first base film from the bottom of the drawing upward. This entire structure is formed through a continuous process and is finally wound on the third drum 30, thereby completing the manufacture of the product.

Meanwhile, in the second embodiment, the lower electrode layer may be located either on the outer surface of the first base film 1 or the inner surface of the first base film 1 in the form of either an attached film or deposition. It is evident that all such modifications fall within the scope of the present disclosure.

### Mode for Invention

Hereinafter, the actual manufacturing process of a reverse mode PDLC film according to the present disclosure and the performance of a fabricated prototype will be described in more detail through experimental examples.

### [Experimental Example 1] Manufacturing of liquid crystal layer

### 1) Formation of alignment-imparting layer on PET base film

Using a 100 µm thick optical PET sheet as a base film, an alignment-imparting layer with an uneven portion was formed by applying a micro-gravure roll-to-roll process, which employs a copper plate roll fabricated by engraving rather than etching.

### 2) Formation of electrode layer

On an alignment layer on which the alignment-imparting layer has been formed in the previous step, an ITO-deposited electrode layer was integrally formed under the conditions of a base pressure of 1.0×10⁻⁵ Torr, a main pressure of 5.0×10⁻³ Torr, a temperature of 100°C, a DC current of 0.75 A, and an RF power of 200 W, thereby completing the manufacture of the alignment layer and preparing it as a first outer layer.

### [Experimental Example 2] Manufacturing of second outer layer

Using a 100 µm thick optical PET sheet as a base film, an ITO-deposited electrode layer was integrally formed on one surface of the base film under the conditions of a base pressure of 1.0×10⁻⁵ Torr, a main pressure of 5.0×10⁻³ Torr, a temperature of 100°C, a DC current of 0.75 A, and an RF power of 200 W. Thus, a second outer layer having a flat opposing surface was manufactured.

### [Experimental Example 3] Preparation of liquid crystal layer

- Five types of nematic single liquid crystals were prepared, including one type in which a biphenyl group served as a mesogenic group and a terminal group was substituted with an alkyl group; one type in which an alkyl group was substituted with F or Cl; one type in which two biphenyl groups were bonded and both terminal groups were substituted with F or Cl; one type in which a terphenyl group served as a mesogenic group and a terminal group was substituted with an alkyl group; and one type in which a terphenyl group served as a mesogenic group and a terminal group was substituted with F or Cl. 100 g of a liquid crystal mixture was prepared by blending them in a ratio of 10:20:30:20:20. In addition, 22 g of a reactive monomer with the formula C₂₁H₂₂O₆ was prepared and mixed with the liquid crystal molecules in a ratio of 1:0.22.
- 10 g of a photoreactive acrylate and 1 g of TPO as a UV initiator were further added to the mixture. The resulting liquid crystal layer mixture was confirmed to exhibit a transparent state.

### [Experimental Example 4] Manufacturing of PDLC film

The liquid crystal layer mixture prepared in the previous step was uniformly applied to a thickness of 20 µm on an alignment layer surface of roll-to-roll equipment using a slot die coater. A second outer layer was laminated on an opposing surface using a lami pressure roll via a wet lamination method. Subsequently, ultraviolet irradiation was performed under the conditions of 10 mW/cm² for 7 minutes using a 34W BLU UV lamp. As a result, a PDLC film with a total thickness of 220um was manufactured.

### [Experimental Example 5] Electricity application test

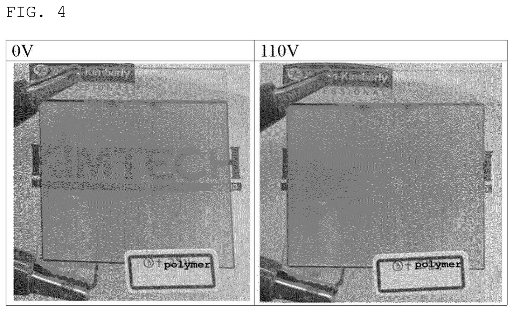

As illustrated in the left image (0 V) of FIG. 4, it was confirmed that a sufficiently transparent state was exhibited in the absence of electricity. At this time, the parallel visible light transmittance was measured to be 80%.

When an electric field of 110 V 0.1 A was applied to the electrode layers on both sides, it was confirmed that the film transitioned to an opaque state, as illustrated in the right image of FIG. 4 (110V). At this time, the parallel visible light transmittance was measured to be 8%.

### Industrial Applicability

According to the foregoing, the present disclosure relates to a reverse mode PDLC film having horizontal alignment of liquid crystals and continuous process manufacturing equipment and method for a PDLC film including an alignment layer, thereby providing a foundation for mass production of reverse mode PDLC films with high productivity at lower cost compared to conventional technologies. Therefore, the present disclosure enables the production of films, windows, and displays with a wide range of characteristics tailored to diverse demands such as those for building or automotive applications.

Although the present disclosure has been described with reference to the embodiments and experimental examples illustrated in the drawings, these are merely exemplary, and those skilled in the art will appreciate that various modifications, additions, and substitutions are possible. It is thus well known to those skilled in the art that the patent right of the present disclosure should be defined by the scope and spirit of the present disclosure as disclosed in the appended claims.

## Claims

1. A reverse mode PDLC film having horizontal alignment of liquid crystals, the reverse mode PDLC film being configured to maintain a transparent state with high visible light transmittance in the absence of applied voltage and to transition to a haze state with low visible light transmittance upon voltage application, the reverse mode PDLC film comprising:
an alignment layer (11) including a base film (1), an alignment-imparting layer (14) formed by coating an acrylate film coating layer on the base film (1), and an electrode layer (15); and
a liquid crystal layer (21) bonded to the alignment layer (11) and including nematic liquid crystals, a reactive monomer for forming a polymer network to maintain a uniform alignment of the nematic liquid crystals, and an additive,
wherein the nematic liquid crystals include at least two types of positive dielectric anisotropy nematic liquid crystals having different dielectric anisotropy, and are configured to maintain a horizontal arrangement parallel to the alignment layer (11) in an electric field-off state.

2. The reverse mode PDLC film of claim 1, wherein the base film (1) is a PET film.

3. The reverse mode PDLC film of claim 1, wherein the nematic liquid crystals are a liquid crystal mixture of at least two types selected from the group of positive dielectric anisotropy nematic liquid crystals in which biphenyl, cyanobiphenyl, or terphenyl groups forms a main mesogenic group and a substance with high electronegativity, such as fluorine or chlorine, forms a terminal group.

4. The reverse mode PDLC film of claim 3, wherein an dielectric anisotropy Δε of the at least two types of nematic liquid crystals satisfies the condition of 5≤Δε≤10.

5. The reverse mode PDLC film of claim 3, wherein the least two types of the nematic liquid crystals have different refractive index anisotropy, and the refractive index anisotropy Δn satisfies the condition of 0.5≤Δn≤1.

6. The reverse mode PDLC film of claim 1, wherein a first outer layer (31) and a second outer layer (32) are respectively bonded to both sides of the liquid crystal layer (21),
wherein at least one of the first outer layer (31) and the second outer layer (32) includes the alignment layer (11) that includes both the alignment-imparting layer and the electrode layer, and at least one cross-section of opposing surfaces of the first outer layer (31) and the second outer layer (32) that face each other with the liquid crystal layer (21) interposed therebetween has a different shape.

7. The reverse mode PDLC film of claim 6, wherein the first outer layer (31) includes the alignment layer (11) having concave-convex grooves, so that among the opposing surfaces of the first outer layer (31) and the second outer layer (32) that face each other with the liquid crystal layer (21) interposed therebetween, the opposing surface of the first outer layer is formed uneven, while the opposing surface of the second outer layer (32) is formed flat.

8. The reverse mode PDLC film of claim 1, wherein the reactive monomer is at least one selected from the group of photopolymerizable monomers having structural formulas of C₃₃H₃₂O₁₀, C₃₇H₃₆O₁₄, C₃₉H₄₄O₁₀, and C₅₀H₄₆O₂₀.

9. The reverse mode PDLC film of claim 1, wherein the liquid crystal layer (21) is manufactured by mixing 20 to 25 parts by weight of the reactive monomer, 10 to 15 parts by weight of a photocurable acrylate, and 1 to 3 parts by weight of a photoinitiator, based on 100 parts by weight of the nematic liquid crystals.

10. Continuous process manufacturing equipment for manufacturing a PDLC film including an alignment layer, the continuous process manufacturing equipment being configured to manufacture a PDLC film in a continuous process, the PDLC film including a liquid crystal layer for maintaining a transparent state with high visible light transmittance in the absence of applied voltage and transitioning to a haze state with low visible light transmittance upon voltage application, and an alignment layer (11) for allowing liquid crystals (25) of the liquid crystal layer (21) to have a uniform alignment in a voltage-off state, the continuous process manufacturing equipment comprising:
a gravure roll (200) having a gravure printing surface for performing coating of an acrylate film coating layer containing a photocurable component on one surface of a first base film (1);
a first photocuring irradiation device (40) located on a downstream side of the gravure roll (200) and curing the acrylate film coating layer on the first base film (1);
a liquid crystal mixture application device (70) located on a downstream of the first photocuring irradiation device (40) and applying a liquid crystal mixture constituting the liquid crystal layer (21) onto an upper surface of the acrylate film coating layer on the first base film (1);
an opposing-surface press roll (80) located on a downstream side of the liquid crystal mixture application device (70) and bonding together the first base film (1) and the second base film (2) having an electrode layer formed thereon; and
a second photocuring irradiation device (60) located on a downstream side of the opposing-surface press roll (80) and curing the liquid crystal mixture while the first base film (1) and the second base film (2) are bonded together.

11. The continuous process manufacturing equipment of claim 10, wherein at least one of the first base film (1) and the second base film (2) is a PET film.

12. The continuous process manufacturing equipment of claim 10, wherein the gravure roll (200) has parallel concave-convex protrusions formed with a pitch of 1.0 to 10 µm.

13. The continuous process manufacturing equipment of claim 12, wherein the gravure roll (200) is plated with chrome.

14. The continuous process manufacturing equipment of claim 10, wherein the acrylate film coating layer includes bisphenol A dimethacrylate as a dimethacrylate-based photocurable polymer, and at least one long-wavelength photoinitiator selected from the group consisting of TPO, HMPP, and Darocure 1173 as a photoinitiator, and
the first photocuring irradiation device irradiates light with a wavelength range of 380 to 420 nm at an intensity of 50 to 70 mW/cm² for an exposure time of 500 to 700 seconds.

15. The continuous process manufacturing equipment of claim 10, further comprising:
an electrode layer formation device (50) located between the downstream side of the first photocuring irradiation device (40) and an upstream side of the liquid crystal mixture application device, and forming an electrode layer on a surface of the acrylate film coating layer on the first base film (1).

16. The continuous process manufacturing equipment of claim 15, wherein the electrode layer formation device is a device that vacuum deposits indium tin oxide (ITO), and
the electrode layer formation device performs a deposition process under the conditions of a base pressure of ~1.0×10⁻⁵ Torr, a main pressure of ~5.0×10⁻³ Torr, a temperature of 80°C to 120°C, a DC current of 0.5 to 1.0 A, and an RF power of 150 to 250 W.

17. The continuous process manufacturing equipment of claim 10, wherein the liquid crystal mixture application device (70) is a slot die coater including a liquid crystal mixture tank, a pump, and a slot die.

18. The continuous process manufacturing equipment of claim 1 or 17, wherein the liquid crystal mixture includes liquid crystal (25) molecules, a reactive monomer, a photoreactive acrylate, and at least one long-wavelength photoinitiator selected from the group consisting of TPO, HMPP, and Darocure 1173 as a photoinitiator, and
the second photocuring irradiation device irradiates light with a wavelength range of 380 to 420 nm at an intensity of 5 to 10 mW/cm² for an exposure time of 300 to 600 seconds.

19. A continuous process manufacturing method for a PDLC film including an alignment layer, the continuous process manufacturing method comprising:
a step of forming an acrylate film coating layer having polymer walls with a pitch of 1.0 to 10 µm using a gravure roll with protrusions formed at a regular interval on a surface of a first base film drawn from a first drum on which the first base film is wound;
a first photocuring step of curing the acrylate film coating layer;
a liquid crystal mixture application step of applying a liquid crystal mixture constituting a liquid crystal layer (21) onto a surface of the acrylate film coating layer that has undergone the first photocuring step;
a lamination step of bonding a second base film drawn from a second drum on which the second base film is wound to the liquid crystal mixture coating layer on the first base film that has undergone the liquid crystal mixture application step in a face-to-face manner; and
a second photocuring step of performing light irradiation so that the liquid crystal mixture after the lamination step is cured to form the liquid crystal layer (21).

20. The continuous process manufacturing method of claim 19, wherein at least one of the first base film and the second base film is a PET film.

21. The continuous process manufacturing method of claim 20, wherein at least one of the first base film and the second base film has an electrode layer formed on at least one surface thereof before being wound on the first drum or the second drum.

22. The continuous process manufacturing method of claim 19, wherein the acrylate film coating layer includes bisphenol A dimethacrylate as a dimethacrylate-based photocurable polymer, and at least one long-wavelength photoinitiator selected from the group consisting of TPO, HMPP, and Darocure 1173 as a photoinitiator, and
the first photocuring irradiation device irradiates light with a wavelength range of 380 to 420 nm at an intensity of 50 to 70 mW/cm² for an exposure time of 500 to 700 seconds.

23. The continuous process manufacturing method of claim 19, further comprising:
an electrode layer formation step of forming an electrode layer on the surface of the acrylate film coating layer on the first base film after the first photocuring step and before the liquid crystal mixture application step.

24. The continuous process manufacturing method of claim 23, wherein the electrode layer formation step includes an indium tin oxide (ITO) vacuum deposition step,
wherein the ITO vacuum deposition step is performed under the conditions of a base pressure of ~1.0×10⁻⁵ Torr, a main pressure of ~5.0×10⁻³ Torr, a temperature of 80°C to 120°C, a DC current of 0.5 to 1.0 A, and an RF power of 150 to 250 W.

25. The continuous process manufacturing method of claim 24, wherein the liquid crystal mixture application step is performed by a slot die coater including a liquid crystal mixture tank, a pump, and a slot die.

26. The continuous process manufacturing method of any one of claims 19 to 25, wherein the liquid crystal mixture includes liquid crystal molecules, a reactive monomer, a photoreactive acrylate, and at least one long-wavelength photoinitiator selected from the group consisting of TPO, HMPP, and Darocure 1173 as a photoinitiator, and
the second photocuring step includes a step of irradiating light with a wavelength range of 380 to 420 nm at an intensity of 5 to 10 mW/cm² for an exposure time of 300 to 600 seconds.
